# FASCICULE DE BREVET EUROPEEN

(11) **EP 2 953 777 B1**
(45) Date de publication et mention de la délivrance du brevet: **12.04.2017**
(21) Numéro de dépôt: 14706912.4
(22) Date de dépôt: 10.02.2014
(51) Int. Cl.: B29C 45/14

(54) **PROCÉDÉ DE FABRICATION DE CORPS CREUX, MOULE POUR FABRIQUER UN CORPS CREUX, ET PROCÉDÉ DE FABRICATION D'UN RÉSERVOIR A CARBURANT**
VERFAHREN ZUR HERSTELLUNG VON HOHLKÖRPERN, FORM ZUR HERSTELLUNG EINES HOHLKÖRPERS SOWIE VERFAHREN ZUR HERSTELLUNG EINES KRAFTSTOFFBEHÄLTERS
METHOD FOR PRODUCING HOLLOW BODIES, MOULD FOR PRODUCING A HOLLOW BODY AND METHOD FOR PRODUCING A FUEL TANK

(30) Priorité: 08.02.2013 FR 1351112
(43) Date de publication de la demande: 16.12.2015
(73) Titulaire: Plastic Omnium Advanced Innovation and Research, 1120 Bruxelles (BE)
(72) Inventeur: BOUCAUX, Eric, F-60157 Elincourt Sainte Marguerite (FR)
(74) Mandataire: Potdevin, Emmanuel Eric
(86) Numéro de dépôt international: PCT/FR2014/050253
(87) Numéro de publication internationale: WO 2014/122413

(56) Documents cités:
- EP-A1- 0 646 447
- WO-A1-89/04755
- DE-A1- 3 443 715
- FR-A- 1 480 660
- JP-A- S63 290 715
- US-A1- 2006 151 505
- "DREI AUF EINEN SCHLAG", PLASTVERARBEITER, HUETHIG GMBH, HEIDELBERG, DE, 1 mai 2008 (2008-05-01), pages 28-30, XP001538180, ISSN: 0032-1338

## Description

La présente invention concerne un procédé de fabrication de corps creux.

Plus particulièrement, la présente invention s'applique à la fabrication d'un réservoir à carburant muni de composants internes ou externes, par exemple de composants pour la mise en communication de fluide entre l'intérieur et l'extérieur dudit réservoir.

Les systèmes à carburant embarqués dans des véhicules de natures diverses comprennent généralement des dispositifs qui permettent la ventilation des hydrocarbures contenus dans le réservoir. Ils peuvent également comprendre des dispositifs pour l'alimentation en carburant du moteur. De tels dispositifs font la liaison entre des éléments contenus dans le réservoir (clapets, pompe à carburant, ...) et des éléments disposés à l'extérieur de celui-ci (canister, tubulure de remplissage, ...). Le passage au travers de la paroi du réservoir doit se faire en tenant compte des exigences d'étanchéité imposées par les normes environnementales (LEV II, PZEV par exemple).

En outre, le réservoir est généralement équipé de circuits (par exemple de ventilation, d'alimentation en carburant) comprenant des tubulures, clapets, pipettes, ... disposés à l'intérieur du réservoir et, le cas échéant, connectés à des composants situés à l'extérieur du réservoir.

Enfin, le réservoir comprend généralement d'autres composants fonctionnels tels que dispositifs anti-ballotement, également désignés baffle(s) anti-vagues (et anti-bruit associés), jauge(s) de mesure du niveau de carburant...

Tous ces composants internes ou externes sont généralement placés ou fixés dans le réservoir après moulage de celui-ci, par des opérations séparées qui sont consommatrices de temps et de main d'oeuvre et sont donc coûteuses. En outre, la gestion de l'approvisionnement et du stockage des composants, en vue de leur montage sur les réservoirs, requiert aussi un travail et des moyens non négligeables, ce qui accroit globalement le prix des réservoirs.

Le document FR1480660 décrit un procédé de fabrication d'un corps creux comprenant au moins un composant comprenant un canal. Le document US2006/0151505 A1 décrit un procédé selon le préambule de la revendication 1.

Un des buts de l'invention est donc de proposer une alternative à la solution actuelle d'apport de composants de tout type sur des réservoirs.

A cet effet, un objet de l'invention est un procédé de fabrication d'un corps creux comprenant au moins un composant comprenant un canal (intérieur), ledit procédé comprenant les étapes suivantes :
- mise en forme d'une feuille de matière plastique par application dans un état fondu contre l'empreinte d'un moule,
- alors que la feuille est encore dans un état fondu, formation du composant par injection de matière plastique dans une cavité d'injection débouchant sur la feuille, de sorte que la matière plastique injectée entre en liaison avec la feuille, ladite cavité d'injection ayant la forme d'au moins une partie du composant,
- formation d'un orifice de communication traversant la feuille de manière à créer une communication entre l'intérieur et l'extérieur du corps creux via le canal du composant obtenu, ladite étape de formation d'un orifice de communication comprenant une étape de perçage de la feuille par un dispositif mobile comprenant une enclume portant une tige de perçage, ledit dispositif mobile étant porté par un noyau présent dans le moule pendant la mise en forme de la feuille à l'état fondu, la cavité d'injection se trouvant à l'extérieur du corps creux, en étant formée dans une partie du moule définissant au moins partiellement l'empreinte du moule.

Grâce à l'invention, on peut fabriquer le composant du corps creux par injection directement sur la feuille, pendant la mise en forme de cette dernière. Il n'est donc plus nécessaire de s'approvisionner en composants préfabriqués, ni de prévoir d'étape de fixation de ce composant sur le corps creux postérieurement à la fabrication de celui-ci. L'invention procure donc l'avantage d'économiser des moyens et de la main d'oeuvre.

En outre, la liaison entre la matière plastique constituant le composant et la matière plastique constituant le corps creux est réalisée alors que la feuille se trouve encore dans un état fondu, donc propice à une bonne liaison entre les deux matières plastiques. Dans le cas où cette liaison est une soudure, ce qui est le mode de liaison préféré dans de nombreuses applications, cet avantage est particulièrement intéressant car la soudure est alors de qualité optimale. De plus, cette soudure ne laisse aucune trace à la surface du corps creux et évite en particulier le bourrelet qui résulte généralement d'une soudure d'un composant sur un corps creux dont la paroi aurait déjà refroidi (c'est-à-dire ne se trouverait plus dans un état fondu). L'invention procure donc aussi un avantage esthétique.

Grâce à l'invention, on établit une communication entre l'intérieur et l'extérieur du réservoir, cette communication s'effectuant au travers du composant.

Selon une variante de l'invention, le composant présente après injetion et avant perçage un passage qui traverse le composant de telle sorte que le perçage de la feuille communique avec ce passage.

Ce passage est par exemple réalisé par une pièce creuse placée dans la cavité d'injection et traversant cette cavité de part et d'autre de telle sorte que l'espace de la pièce creuse n'est pas rempli par la matière injectée dans la cavité d'injection.

Selon une autre variante de l'invention, le perçage est réalisé (par exemple avec une tige) de façon à ménager un passage qui traverse le composant.

L'enclume permet de soutenir la feuille de manière qu'elle résiste à la pression d'injection de la matière plastique injectée dans la cavité d'injection.
- Selon l'invention, l'enclume est formée par un dispositif mobile porté par un noyau présent dans le moule pendant la mise en forme de la feuille à l'état fondu. La cavité d'injection se trouve alors à l'extérieur du corps creux, en étant formée dans une partie du moule définissant au moins partiellement l'empreinte du moule. Dans ce cas, le dispositif mobile peut en outre remplir une fonction supplémentaire à celle de soutenir la feuille, comme par exemple de porter un insert qui se retrouve dans la cavité d'injection après placement de l'enclume contre la feuille et se fait surmouler par la matière plastique injectée dans la cavité d'injection, pour devenir un insert du composant ainsi réalisé, et/ou de mettre en forme la feuille au droit de la cavité, pour l'adapter à une géométrie particulière du composant. On peut ainsi, grâce à l'invention, fabriquer un corps creux muni, dès sa sortie du moule de mise en forme de la feuille, d'un composant fixé à sa paroi et fabriqué in situ, c'est-à-dire à l'intérieur du moule de mise en forme, et incluant un insert lui-même surmoulé dans le composant et/ou à la géométrie duquel la paroi du corps creux est conformée.
- Le moule est réalisé en plusieurs parties, généralement en deux parties.
- L'étape de mise en forme de la feuille consiste en une opération de soufflage (injection d'un gaz sous pression d'un côté de la feuille pour la plaquer contre l'empreinte du moule) ou en une opération de thermoformage (aspiration de l'air présent entre la feuille et le moule pour plaquer la feuille contre l'empreinte du moule).
- La matière plastique injectée dans la cavité d'injection est du polyéthylène haute densité (PEHD) ou un polyamide (PA).
- La matière plastique injectée dans la cavité d'injection est une matière plastique chimiquement compatible avec la matière plastique d'une couche de la feuille entrant en liaison avec la matière plastique injectée. On entend par chimiquement compatible le fait que les deux matières se soudent convenablement l'une avec l'autre.
- Le corps creux est un réservoir, de préférence un réservoir à carburant.
- Le composant est choisi parmi la liste suivante : clapet, pompe à carburant, canister, tubulure, pipette, embout de raccordement, dispositif anti-ballotement, jauge de mesure, écran thermique, organe de fixation d'un de ces éléments.
- La feuille est une feuille extrudée immédiatement avant sa mise en forme. La feuille peut être une paraison ou un ensemble de deux feuilles d'un procédé de soufflage, tel que celui décrit dans EP1110697 au nom de la demanderesse.

Un autre objet de l'invention est un moule pour fabriquer un corps creux comprenant au moins un composant, ledit moule comprenant :
- des moyens de mise en forme d'une feuille en matière plastique par application à chaud contre l'empreinte du moule ;
- une cavité d'injection débouchant à proximité d'une partie de la surface de l'empreinte du moule ;
- des moyens d'injection de matière plastique dans la cavité d'injection
- une enclume apte à se positionner contre la feuille, sur une face de ladite feuille
- une enclume apte à se positionner contre la feuille, sur une face de ladite feuille opposée à celle sur laquelle débouche la cavité d'injection et au droit de ladite cavité d'injection, l'enclume remplissant la fonction supplémentaire de percer la feuille pour réaliser un canal de communication entre l'intérieur et l'extérieur du réservoir, canal qui coopère avec le composant obtenu par injection de matière plastique dans la cavité.

Un autre but de l'invention est un procédé de fabrication d'un réservoir à carburant selon la revendication 7.

Dans la présente description, on entend par état fondu un état dans lequel la feuille de matière plastique se trouve lorsqu'elle est à une température suffisante pour pouvoir se déformer plastiquement sous l'effet d'une contrainte externe prédéterminée (exercée par exemple par soufflage d'air ou par aspiration). Cet état est par exemple celui d'une feuille qui vient juste d'être extrudée à sortie d'une tête d'extrusion. La feuille à l'état fondu, bien que plastiquement déformable, possède une cohésion suffisante pour conserver sa forme de feuille. L'état fondu ne doit donc pas être confondu avec celui d'un liquide ou d'une pâte qui seraient trop fluides pour conserver une forme de feuille. Dans la présente description, l'expression « à l'état fondu » ne signifie par qu'il n'existe qu'un seul état fondu de la feuille et doit être interprétée, si elle est utilisée, comme signifiant « dans un état fondu ».

L'invention sera mieux comprise à la lecture des figures annexées, qui sont fournies à titre d'exemples et ne présentent aucun caractère limitatif, dans lesquelles :
La figure 1 est une vue en coupe d'une région d'un moule pour la mise en oeuvre d'un procédé de fabrication de corps creux.
La figure 2 est une vue analogue à la figure 1, qui illustre un moule et le procédé selon l'invention.

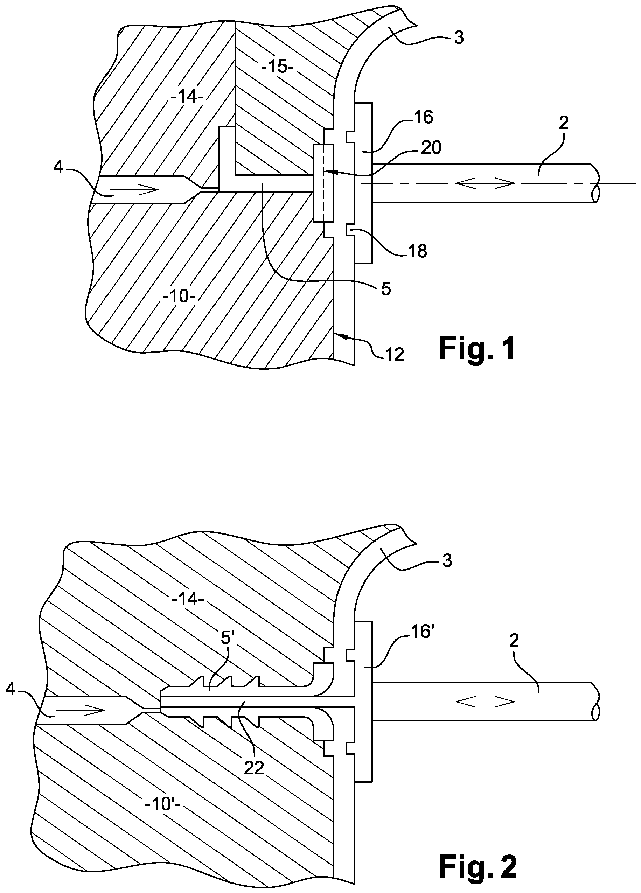

On a représenté, sur la figure 1, une portion d'un moule comprenant une partie de moule 10, laquelle partie délimite partiellement l'empreinte 12 du moule. Il s'agit d'un moule pour la fabrication d'un réservoir à carburant. L'empreinte 12 a donc la forme de l'enveloppe externe de ce réservoir.

La partie de moule 10 délimite généralement la moitié de l'empreinte 12 du moule, lequel est alors constitué de deux parties.

Sur la figure 1, la partie de moule 10 n'est représentée que dans la moitié inférieure de la figure en raison de la présence de tiroirs mobiles 14 et 15 qui ne sont présents que dans la région du moule représentée à la figure 1. Ces deux tiroirs mobiles 14 et 15 seront décrits ultérieurement.

Une feuille de matière plastique 3, par exemple en PEHD, est au contact de l'empreinte 12. Cette feuille 3 se trouve dans un état fondu. Elle est issue d'un procédé d'extrusion réalisé (par des moyens non représentés) quelques instants avant sa mise en forme dans le moule.

Dans l'exemple illustré, cette mise en forme est obtenue par soufflage : de l'air est introduit du côté de la feuille 3 opposé à l'empreinte 12, sous une pression de quelques bars, par exemple 5 bars, de sorte que la feuille 3, qui est plastiquement déformable du fait qu'elle se trouve dans un état fondu, se plaque contre l'empreinte 12 et en prend la conformation. La mise en forme de la feuille 3 par application contre l'empreinte 12 sous l'effet de la pression de l'air s'effectue pendant une durée et sous une pression qui sont déterminées en fonction de différents paramètres du procédé de fabrication du réservoir que l'homme du métier sait déterminer.

Dans le procédé décrit, la feuille 3 est enfermée entre la partie de moule 10 et un noyau (non représenté, situé à droite de la partie de moule 10) qui porte un dispositif mobile 2 et, éventuellement, d'autres dispositifs mobiles ainsi que des composants destinés à être fixés à la paroi du réservoir.

Le dispositif mobile 2 comprend une enclume 16 qui se présente sous la forme d'un disque. Une saillie annulaire 18 dépasse de la face du disque 16 qui se trouve en regard de l'empreinte 12 et vient au contact de la feuille 3.

Comme indiqué précédemment, la partie de moule 10 inclut des tiroirs mobiles 14 et 15. Ces tiroirs mobiles 14 et 15 délimitent, avec la partie de moule 10, une cavité d'injection 5 ouverte, dont l'ouverture 20 (matérialisée par un trait interrompu) débouche dans l'empreinte 12.

La forme de la cavité 5 est celle d'un composant, ici une patte de fixation, que l'on désire réaliser par surmoulage directement sur la feuille 3 alors que celle-ci est encore dans un état fondu.

Entre la partie de moule 10 et le tiroir mobile 14, est également formé un canal d'injection 4 qui permet d'amener de la matière plastique à injecter dans la cavité d'injection 5.

Après que la feuille 3 a été mise en forme par application dans un état fondu contre l'empreinte 12 du moule, c'est-à-dire après un premier soufflage d'air sous pression entre la partie de moule 10 et le noyau (non représenté), et tant que la feuille 3 est toujours dans un état fondu, on déplace le dispositif mobile 2 pour amener le disque 16 au contact de la feuille 3. Le dispositif mobile 2 est alors maintenu dans cette position, de manière que le disque 16 serve de soutien à la feuille 3 pour l'empêcher de se déformer en direction du noyau.

On forme alors la patte de fixation par injection de matière plastique dans la cavité d'injection 5, à travers le canal 4. La matière plastique injectée remplit la cavité d'injection 5 et vient au contact de la feuille 3, laquelle obture l'ouverture 20 de ladite cavité. On voit que la matière plastique injectée repousse légèrement la feuille 3 contre le disque 16, mais grâce à la saillie annulaire 18 du disque 16, la feuille 3 repoussée se conforme localement en une sorte de cuvette dirigée vers la cavité d'injection 5, ce qui permet à la feuille 3 de réaliser une meilleure étanchéité d'obturation de l'ouverture 20 de la cavité d'injection 5. Cette disposition particulière est optionnelle.

La matière plastique injectée entre donc en liaison avec la matière plastique constituant la feuille 3 et la soudure de ces deux matières plastiques, qui se trouvent toutes les deux dans un état fondu, se produit.

La patte de fixation se trouve ainsi surmoulée sur la feuille 3.

Après un premier refroidissement de la patte de fixation, le dispositif mobile 2 est déplacé en sens inverse pour décoller le disque 16 de la feuille 3. La partie mobile 10 et le noyau (non représenté) sont ensuite écartés l'un de l'autre et le noyau est retiré d'entre les parties du moule.

Les deux parties du moule sont ensuite réunies et la finition du réservoir est réalisée, selon le procédé connu.

On décrit maintenant le procédé selon l'invention, en référence à la figure 2, dans le cas où le composant est un embout de raccordement.

L'enseignement de la description ci-dessus en référence à la figure 1 est donc transposable à l'invention, dans le cas où le composant présente un canal de communication (aussi appelé canal intérieur) et où on perce la feuille, et en particulier au mode de réalisation de la figure 2.

La cavité d'injection 5' est donc conformée en un embout de raccordement. Elle est définie entre la partie de moule 10' et le tiroir mobile 14'.

On remarque en outre que le disque 16' se distingue du disque 16 en ce qu'il porte une tige 22 qui vient traverser la feuille 3 lorsque ledit disque 16' est amené au contact de la feuille 3.

Cette tige 22 perce la feuille 3 en formant un orifice de communication entre l'intérieur et l'extérieur du réservoir et réserve dans la cavité 5' un volume tubulaire qui constituera un canal à l'intérieur de l'embout de raccordement.

Dans une variante non représentée, la tige 22 porte un insert qui est surmoulé dans l'embout de raccordement lors de l'injection de matière plastique.

## Revendications

1. Procédé de fabrication d'un corps creux comprenant au moins un composant comprenant un canal, ledit procédé comprenant les étapes suivantes :
- mise en forme d'une feuille (3) de matière plastique par application dans un état fondu contre l'empreinte (12) d'un moule,
- alors que la feuille (3) est encore dans un état fondu, formation du composant par injection de matière plastique dans une cavité (5, 5') d'injection débouchant sur la feuille (3), de sorte que la matière plastique injectée entre en liaison avec la feuille (3), ladite cavité d'injection (5, 5') ayant la forme d'au moins une partie du composant,
ledit procédé comprenant en outre l'étape suivante :
- formation d'un orifice de communication traversant la feuille de manière à créer une communication entre l'intérieur et l'extérieur du corps creux via le canal du composant obtenu, **caractérisé en ce que** ladite étape de formation d'un orifice de communication comprend une étape de perçage de la feuille par un dispositif mobile (2, 16, 16') comprenant une enclume (16') portant une tige de perçage (22), ledit dispositif mobile (2, 16, 16') étant porté par un noyau présent dans le moule pendant la mise en forme de la feuille à l'état fondu, la cavité d'injection (5, 5') se trouvant à l'extérieur du corps creux, en étant formée dans une partie (10) du moule définissant au moins partiellement l'empreinte (12) du moule.

2. Procédé selon la revendication 1, dans lequel le dispositif mobile (2, 16') porte un insert qui se retrouve dans la cavité d'injection après placement de l'enclume contre la feuille et se fait surmouler par la matière plastique injectée dans la cavité d'injection, pour devenir un insert du composant ainsi réalisé.

3. Procédé selon la revendication 2, dans lequel le dispositif mobile (2, 16') remplit la fonction supplémentaire de mettre en forme la feuille au droit de la cavité, pour l'adapter à une géométrie particulière du composant.

4. Procédé selon l'une quelconque des revendications précédentes, dans lequel le corps creux est un réservoir, de préférence un réservoir à carburant.

5. Procédé selon l'une quelconque des revendications précédentes, dans lequel le composant est choisi parmi la liste suivante : clapet, pompe à carburant, canister, tubulure, pipette, embout de raccordement, dispositif anti-ballotement, jauge de mesure, écran thermique, organe de fixation d'un de ces éléments.

6. Moule pour fabriquer un corps creux comprenant au moins un composant comprenant un canal, ledit moule comprenant :
- des moyens de mise en forme d'une feuille (3) en matière plastique par application à chaud contre l'empreinte du moule ;
- une cavité (5, 5') d'injection débouchant à proximité d'une partie de la surface de l'empreinte (12) du moule ;
- des moyens (4) d'injection de matière plastique dans la cavité d'injection ;
- une enclume (16, 16') apte à se positionner contre la feuille (3), sur une face de ladite feuille (3) opposée à celle sur laquelle débouche la cavité (5, 5') d'injection et au droit de ladite cavité d'injection, l'enclume remplissant la fonction supplémentaire de percer la feuille pour réaliser un canal de communication entre l'intérieur et l'extérieur du corps creux, canal qui coopère avec le composant obtenu par injection de matière plastique dans la cavité (5').

7. Procédé selon l'une quelconque des revendications 1 à 5, **caractérisé en ce que** ledit corps creux est un réservoir à carburant qui est fabriqué à l'aide d'un moule en au moins deux parties définissant son empreinte, et **en ce que** ce procédé comprend les étapes suivantes :
- ouverture du moule par séparation de ses parties (10) et positionnement d'un noyau portant des dispositifs mobiles (2) et/ou des composants à fixer au réservoir entre lesdites parties du moule,
- introduction d'une feuille (3) à l'état fondu entre une partie (10) de moule et le noyau,
- rapprochement de la partie (10) de moule et du noyau pour emprisonner la feuille (3) à l'état fondu entre eux,
- injection d'un gaz d'un côté de la feuille (3) pour la mettre en forme par application dans un état fondu contre l'empreinte (12) de la partie (10) de moule,
- séparation de la partie (10) de moule et du noyau,
- retrait du noyau d'entre les parties (10) du moule,
- fermeture du moule par rapprochement de ses parties,
- fixation de la feuille (3) à d'autres feuilles mises en forme contre d'autres parties du moule pour former un réservoir,
- refroidissement et évacuation du réservoir.

## Patentansprüche

1. Verfahren zum Herstellen eines Hohlkörpers, der wenigstens eine Komponente umfasst, die einen Kanal umfasst, wobei das Verfahren die folgenden Schritte umfasst:
- Formen einer Platte (3) aus Kunststoff durch Aufbringung in einem aufgeschmolzenen Zustand gegen die Formhöhlung (12) eines Formwerkzeugs,
- während die Platte (3) noch in einem aufgeschmolzenen Zustand ist, Ausbilden der Komponente durch Einspritzen von Kunststoff in einen Einspritzhohlraum (5, 5'), der an der Platte (3) ausmündet, so dass der eingespritzte Kunststoff mit der Platte (3) in Verbindung kommt, wobei der Einspritzhohlraum (5, 5') die Form mindestens eines Teils der Komponente hat,
wobei das Verfahren ferner den folgenden Schritt umfasst:
- Ausbilden einer Kommunikationsöffnung, welche die Platte in der Form durchquert, dass eine Kommunikation zwischen dem Inneren und dem Äußeren des Hohlkörpers über den Kanal der erhaltenen Komponente erzeugt wird, **dadurch gekennzeichnet, dass** der Schritt des Ausbildens einer Kommunikationsöffnung einen Schritt des Durchbohrens der Platte durch eine bewegliche Vorrichtung (2, 16, 16') umfasst, die einen Amboss (16') umfasst, der einen Bohrschaft (22) trägt, wobei die bewegliche Vorrichtung (2, 16, 16') von einem Kern getragen wird, der während des Formens der Platte in aufgeschmolzenem Zustand in dem Formwerkzeug vorhanden ist, wobei sich der Einspritzhohlraum (5, 5') außerhalb des Hohlkörpers befindet, indem er in einem Teil (10) des Formwerkzeugs gebildet wird, der mindestens teilweise die Formhöhlung (12) des Formwerkzeugs definiert.

2. Verfahren nach Anspruch 1, bei dem die bewegliche Vorrichtung (2, 16') einen Einsatz trägt, der sich nach Platzieren des Ambosses gegen die Platte in dem Einspritzhohlraum befindet und durch den Kunststoff, der in den Einspritzhohlraum eingespritzt wird, umspritzt wird, um ein Einsatz der so realisierten Komponente zu werden.

3. Verfahren nach Anspruch 2, bei dem die bewegliche Vorrichtung (2, 16') die zusätzliche Funktion erfüllt, die Platte rechtwinklig zu dem Hohlraum zu formen, um sie an eine besondere Geometrie der Komponente anzupassen.

4. Verfahren nach einem der vorhergehenden Ansprüche, bei dem der Hohlkörper ein Behälter ist, vorzugsweise ein Kraftstoffbehälter.

5. Verfahren nach einem der vorhergehenden Ansprüche, bei dem die Komponente aus der folgenden Liste ausgewählt ist: Ventil, Kraftstoffpumpe, Kanister, Stutzen, Pipette, Anschlussstutzen, Anti-Schwapp-Vorrichtung, Messstab, Hitzeschild, Befestigungsteil eines dieser Elemente.

6. Formwerkzeug zur Herstellung eines Hohlkörpers, der wenigstens eine Komponente umfasst, die einen Kanal umfasst, wobei das Formwerkzeug Folgendes umfasst:
- Mittel zum Formen einer Platte (3) aus Kunststoff durch Heißaufbringung gegen die Formhöhlung des Formwerkzeugs;
- einen Einspritzhohlraum (5, 5'), der in der Nähe eines Teils der Oberfläche der Formhöhlung (12) des Formwerkzeugs ausmündet;
- Mittel (4) zum Einspritzen von Kunststoff in den Einspritzhohlraum;
- einen Amboss (16, 16'), der dazu eingerichtet ist, sich gegen die Platte (3) zu positionieren, auf einer Fläche der Platte (3), die derjenigen gegenüberliegt, auf welche der Einspritzhohlraum (5, 5') ausmündet, und rechtwinklig zu dem Einspritzhohlraum, wobei der Amboss die zusätzliche Funktion erfüllt, die Platte zu durchbohren, um einen Kommunikationskanal zwischen dem Inneren und dem Äußeren des Hohlkörpers zu realisieren, wobei der Kanal mit der durch Einspritzen von Kunststoff in den Hohlraum (5') erhaltenen Komponente zusammenwirkt.

7. Verfahren nach einem der Ansprüche 1 bis 5, **dadurch gekennzeichnet, dass** der Hohlkörper ein Kraftstoffbehälter ist, der mittels eines Formwerkzeugs aus mindestens zwei Teilen, die dessen Formhöhlung definieren, hergestellt wird, und dadurch, dass dieses Verfahren die folgenden Schritte umfasst:
- Öffnen des Formwerkzeugs durch Trennen seiner Teile (10) und Positionieren eines Kerns, der bewegliche Vorrichtungen (2) und/oder Komponenten zur Befestigung an dem Behälter trägt, zwischen den Teilen des Formwerkzeugs,
- Einführen einer Platte (3) in aufgeschmolzenem Zustand zwischen einem Teil (10) des Formwerkzeugs und dem Kern,
- Annähern des Teils (10) des Formwerkzeugs und des Kerns, um die Platte (3) in aufgeschmolzenem Zustand zwischen ihnen einzuschließen,
- Einsprühen eines Gases auf einer Seite der Platte (3), um sie durch Aufbringung in einem aufgeschmolzenen Zustand gegen die Formhöhlung (12) des Teils (10) des Formwerkzeugs zu formen,
- Trennen des Teils (10) des Formwerkzeugs und des Kerns,
- Herausnehmen des Kerns zwischen den Teilen (10) des Formwerkzeugs,
- Schließen des Formwerkzeugs durch Annähern seiner Teile,
- Befestigen der Platte (3) an anderen Platten, die gegen andere Teile des Formwerkzeugs geformt wurden, um einen Behälter zu bilden,
- Abkühlen und Entleeren des Behälters.

## Claims

1. Method for producing a hollow body comprising at least one component comprising a channel, said method comprising the following steps:
- formation of a sheet (3) of plastic material by application, in a molten state against the dye (12) of a mould,
- while the sheet (3) is still in a molten state, formation of the component by injection of plastic material into an injection cavity (5, 5') emerging on the sheet (3), such that the injected plastic material bonds with the sheet (3), said injection cavity (5, 5') having the form of at least a part of the component, said method also comprising the following step:
- formation of a communication orifice passing through the sheet so as to create a communication between the interior and the exterior of the hollow body via the channel of the component obtained, **characterized in that** said step of formation of a communication orifice comprises a step of piercing of the sheet by a mobile device (2, 16, 16') comprising an anvil (16') bearing a piercing rod (22), said mobile device (2, 16, 16') being borne by a core present in the mould during the formation of the sheet in the molten state, the injection cavity (5, 5') being located outside of the hollow body, by being formed in a part (10) of the mould at least partially defining the dye (12) of the mould.

2. Method according to Claim 1, in which the mobile device (2, 16') bears an insert which is located in the injection cavity after the placement of the anvil against the sheet and is overmoulded by the plastic material injected into the injection cavity, to become an insert of the duly produced component.

3. Method according to Claim 2, in which the mobile device (2, 16') fulfils an additional function of formation of the sheet in line with the cavity, to adapt it to a particular geometry of the component.

4. Method according to any one of the preceding claims, in which the hollow body is a tank, preferably a fuel tank.

5. Method according to any one of the preceding claims, in which the component is chosen from the following list: check valve, fuel pump, canister, nozzle, pipette, coupling fitting, anti-sway device, measurement gauge, thermal screen, fixing member of one of these elements.

6. Mould for producing a hollow body comprising at least one component comprising a channel, said mould comprising:
- means for forming a sheet (3) of plastic material by hot application against the dye of the mould;
- an injection cavity (5, 5') emerging in proximity to a part of the surface of the dye (12) of the mould;
- means (4) for injecting plastic material into the injection cavity;
- an anvil (16, 16') which can be positioned against the sheet (3), on a face of said sheet (3) opposite to that on which the injection cavity (5, 5') emerges and in line with said injection cavity, the anvil fulfilling an additional function of piercing the sheet to produce a communication channel between the interior and the exterior of the hollow body, which channel cooperates with the component obtained by injection of plastic material into the cavity (5').

7. Method according to any one of Claims 1 to 5, **characterized in that** said hollow body is a fuel tank which is produced using a mould in at least two parts defining its dye, and **in that** this method comprises the following steps:
- opening of the mould by separation of its parts (10) and positioning of a core bearing mobile devices (2) and/or components to be fixed to the tank between said parts of the mould,
- introduction of a sheet (3) in the molten state between a part (10) of the mould and the core,
- bringing together of the part (10) of the mould and of the core to trap the sheet (3) in the molten state between them,
- injection of a gas on one side of the sheet (3) to form it by application in a molten state against the dye (12) of the part (10) of the mould,
- separation of the part (10) of the mould and of the core,
- removal of the core from between the parts (10) of the mould,
- closure of the mould by bringing together of its parts,
- fixing of the sheet (3) to other sheets formed against other parts of the mould to form a tank,
- cooling and draining of the tank.
